# EUROPÄISCHE PATENTSCHRIFT

(11) **EP 2 233 760 B1**
(45) Veröffentlichungstag und Bekanntmachung des Hinweises auf die Patenterteilung: **23.11.2011**
(21) Anmeldenummer: 10003075.8
(22) Anmeldetag: 23.03.2010
(51) Int. Cl.: F16C 19/38, F16C 33/66, F03D 11/00

(54) **Fettgeschmiertes zweireihiges Wälzlager und Lagersystem mit einem derartigen Wälzlager und einer Schmiereinrichtung**
Grease lubricated two-row roller bearing and storage system with such a roller bearing and a lubricating device
Palier à roulement à deux rangées lubrifié par de la graisse et système de stockage doté d'un tel palier à roulement et d'un dispositif de lubrification

(30) Priorität: 25.03.2009 DE 102009014922
(43) Veröffentlichungstag der Anmeldung: 29.09.2010
(73) Patentinhaber: AB SKF, 415 50 Göteborg (SE)
(72) Erfinder: Hofmann, Matthias, 97422 Schweinfurt (DE)
(74) Vertreter: Schonecke, Mitja

(56) Entgegenhaltungen:
- WO-A1-2009/020087
- DE-U1-202006 011 249
- JP-A- 2008 309 312
- US-A1- 2007 081 896
- US-A1- 2008 099 280

## Beschreibung

Die Erfindung betrifft ein fettgeschmiertes zweireihiges Wälzlager, das als ein Großlager insbesondere zur Lagerung einer Rotorwelle einer Windenergieanlage ausgebildet ist. Weiterhin betrifft die Erfindung ein Lagersystem mit einem derartigen Wälzlager und einer Schmiereinrichtung sowie eine Windenergieanlage mit einem derartigen Lagersystem.

Als Großlager werden im Folgenden Lager bezeichnet, die einen Außenring mit einem Durchmesser von wenigstens einem Meter aufweisen. Es können auch andere Kriterien und insbesondere auch andere Durchmesser-Werte für die Definition von Großlagern herangezogen werden. Entscheidend ist jedenfalls, dass es sich um Lager handelt, die deutlich größer sind als solche, die üblicherweise in Alltagsanwendungen, wie beispielsweise bei Pkws eingesetzt werden und einen Außendurchmesser von einigen Zentimetern aufweisen. Soweit im Folgenden Begriffe wie axial, radial usw. verwendet werden, die jeweils in Relation zu einer Achse stehen, ist unter dieser Achse die Rotationsachse des Lagers zu verstehen, falls nichts anderes angegeben ist.

Bei der Konstruktion eines Großlagers ist ein reines Hochskalieren der Lagergeometrie ausgehend von einem bekannten "kleinen" Lager oder eine analoge Anwendung von Maßnahmen, die für "kleine" Lager bekannt sind, in der Regel nicht sinnvoll, da bei Großlagern häufig andere Kriterien, wie beispielsweise das Gewicht, der für die Herstellung erforderliche Materialeinsatz, der Montageaufwand, Reparaturmöglichkeiten usw. in den Vordergrund treten. Beispielsweise kann der Fall auftreten, dass es schwierig ist in einem Großlager optimale Schmierverhältnisse zu gewährleisten, obwohl bei einem kleinen Lager gleichen Typs keine Probleme mit der Schmierung auftreten. Andererseits ist eine optimale Schmierung bei einem Großlager besonders wichtig, um einen verschleißbedingten Ausfall des Lagers zu verhindern oder zumindest hinauszuschieben, da ein Lagerausfall bei einem Großlager mit einem besonders hohen Aufwand und mit besonders hohen Kosten verbunden ist.

Aus der DE 20 2006 011 249 U 1 ist eine Lageranordnung mit einem Außenring und einem Innenring bekannt, wobei in dem Außenring und/oder in dem Innenring wenigstens eine vorzugsweise radial verlaufende Bohrung vorgesehen ist, in der ein Zumessventil als Einsatzpatrone aufgenommen ist, das mit einer Schmierstoffversorgung verbunden ist.

Der Erfindung liegt die Aufgabe zugrunde, bei einem Großlager eine zuverlässige Schmierung sicherzustellen und gleichzeitig den dafür erforderlichen Aufwand überschaubar zu halten.

Diese Aufgabe wird durch ein zweireihiges Wälzlager zur drehbaren Lagerung eines Maschinenteils relativ zu einer Rotationsachse gemäß der Merkmalskombination des Anspruchs 1 sowie durch ein Lagersystem gemäß Anspruch 10 gelöst.

Das erfindungsgemäße Wälzlager weist einen Außenring, dessen Außendurchmesser wenigstens 1 Meter, vorzugsweise wenigstens 1,5 Meter, beträgt, einen ersten Innenring, einen zweiten Innenring, der bezogen auf die Rotationsachse axial neben dem ersten Innenring angeordnet ist, einen Satz von ersten Wälzkörpern, die zwischen dem Außenring und dem ersten Innenring abrollen und einen Satz von zweiten Wälzkörpern auf, die bezogen auf die Rotationsachse axial neben den ersten Wälzkörpern angeordnet sind und zwischen dem Außenring und dem zweiten Innenring abrollen. Die Besonderheit des erfindungsgemäßen Wälzlagers besteht darin, dass bezogen auf die Rotationsachse an einer ersten Axialseite des Außenrings eine erste Schmierfettzuführung zur Versorgung der ersten Wälzkörper mit Schmierfett angeordnet ist und an einer zweiten Axialseite des Außenrings eine zweite Schmierfettzuführung zur Versorgung der zweiten Wälzkörper mit Schmierfett angeordnet ist und wenigstens ein Schmierfettauslass vorgesehen ist, der sich mit dem ersten Innenring und dem zweiten Innenring mitdreht.

Der erste Innenring und der zweite Innenring können zwar auch einteilig als ein gemeinsames Ringteil ausgebildet sein. Bevorzugt ist jedoch eine Ausführung als zwei separate Teile, die beispielsweise Vorteile bei der Montage des erfindungsgemäßen Wälzlagers bieten.

Die Erfindung hat den Vorteil, dass mit relativ geringem Aufwand eine zuverlässige Schmierung des Wälzlagers möglich ist. Insbesondere wird eine gleichermaßen gute Schmierung beider Wälzkörperreihen erzielt. Ein weiterer Vorteil besteht darin, dass durch die Verwendung von Schmierfett wesentlich weniger Probleme hinsichtlich der Abdichtung des Wälzlagers auftreten als beispielsweise bei der Verwendung von Öl.

Der Außenring und die zum Außenring drehfest ausgebildeten Komponenten können als im Betriebszustand feststehend ausgebildet sein. Weiterhin können die erste Schmierfettzuführung und die zweite Schmierfettzuführung zum Außenring drehfest ausgebildet sein. Dies erleichtert die Anbindung an eine Schmierfett-Infrastruktur in der Umgebung des Wälzlagers. Besonders vorteilhaft ist es, wenn die erste Schmierfettzuführung und die zweite Schmierfettzuführung in einer radialen Entfernung von der Rotationsachse angeordnet sind, die größerer ist als der maximale Radius des ersten Innenrings und des zweiten Innenrings.

Die erste Schmierfettzuführung kann an einer ersten Halterung angeordnet sein und die zweite Schmierfettzuführung kann an einer zweiten Halterung angeordnet sein. Die erste Halterung und die zweite Halterung können insbesondere am Außenring befestigt sein. Dies ermöglicht eine Vormontage der Halterungen am Wälzlager vor dem Einbau des Wälzlagers in einer Einbauumgebung. Beispielsweise können die erste Halterung und die zweite Halterung mittels Schrauben am Außenring befestigt sein, die zudem der Befestigung des Außenrings in einer Einbauumgebung dienen. Dadurch können separate Befestigungsmittel eingespart werden, die lediglich der Befestigung der Halterungen dienen.

An der ersten Halterung kann ein erster Dichtring befestigt sein und an der zweiten Halterung kann ein zweiter Dichtring befestigt sein. Auf diese Weise lässt sich mit einem geringen Aufwand ein zuverlässiger Sitz des ersten und des zweiten Dichtrings erreichen. Ein weiterer Vorteil dieser Ausgestaltung besteht darin, dass die Halterungen nicht eigens für die Schmierfettzuführungen erforderlich sind, sondern mehrere Funktionen ausüben. Weiterhin ist es möglich, dass der erste Dichtring und die erste Halterung sowie der zweite Dichtring und die zweite Halterung einteilig ausgebildet sind. Dadurch kann die Zahl der einzeln zu handhabenden Bauteile reduziert werden. Insbesondere können die Dichtringe und die Halterungen aus dem gleichen Material bestehen. Dies stellt eine besonders effiziente und kostengünstige Variante für die Realisierung der Dichtringe dar. Derart ausgebildete Dichtringe können zudem Axialbohrungen für die Befestigung der Dichtringe am Außenring und/oder Axialbohrungen als Schmierfettzuführungen aufweisen.

Der erste Dichtring kann berührend an einer ersten Anlauffläche des ersten Innenrings anlaufen und der zweite Dichtring kann berührend an einer zweiten Anlauffläche des zweiten Innenrings anlaufen. Besonders vorteilhaft ist es, wenn die Anlaufflächen jeweils an einer Schulter der Innenringe ausgebildet sind. Die Innenringe sind in der Regel ohnehin aus einem geeigneten, d. h. ausreichend harten, Material hergestellt und mit hoher Präzision gefertigt. Insbesondere können der erste Dichtring und der zweite Dichtring jeweils wenigstens eine Dichtlippe aufweisen. Durch diese Maßnahmen lässt sich eine zuverlässige Abdichtung des Wälzlagers erreichen. Die Dichtlippen können beispielsweise durch spanende Bearbeitung hergestellt sein. Ebenso ist es möglich, dass die Dichtlippen spritztechnisch oder durch Vulkanisieren hergestellt sind.

Das erfindungsgemäße Wälzlager kann so ausgebildet sein, dass über den Umfang des Außenrings verteilt mehrere erste Schmierfettzuführungen und mehrere zweite Schmierfettzuführungen angeordnet sind. Dies hat den Vorteil, dass über den gesamten Umfang gleich bleibend gute Schmierbedingungen erzielt werden können und dass das zugeführte Schmierfett sehr schnell über das gesamte Wälzlager verteilt wird.

Der Schmierfettauslass kann in einer kleineren radialen Entfernung von der Rotationsachse angeordnet sein als die erste Schmierfettzuführung und die zweite Schmierfettzuführung. Dadurch wird eine gute Schmierung des Radialbereichs zwischen den Schmierfettzuführungen und dem Schmierfettauslass erreicht. Außerdem wird dadurch erreicht, dass das gesamte Wälzlager radial einwärts bis zum Schmierfettauslass mit Schmierfett gefüllt wird, da das Schmierfett bei einer Rotation des Wälzlagers radial nach außen gedrängt wird und somit erst dann durch den Schmierfettauslass abfließt, wenn es sich bis dorthin aufgestaut hat.

Der Schmierfettauslass kann in die Bohrung des ersten Innenrings und/oder des zweiten Innenrings münden. Insbesondere kann der Schmierfettauslass bezogen auf die Rotationsachse axial zwischen den ersten Wälzkörpern und den zweiten Wälzkörpern angeordnet sein. Dies hat den Vorteil, dass sich ausgehend von den ersten und zweiten Schmierfettzuführungen jeweils ein Schmierfettfluss über die gesamte axiale Breite jeder Wälzkörperreihe hinweg einstellt und demgemäß eine vollständige Schmierung des Wälzlagers gewährleistet ist.

Im Axialbereich des Schmierfettauslasses kann eine umlaufende Nut ausgebildet sein. Die Nut begünstigt den Schmierfettabfluss zum Schmierfettauslass hin. Weiterhin kann vorgesehen sein, dass der erste Innenring und der zweite Innenring einander axial berühren und die Nut im Bereich der Stoßstelle zwischen dem ersten Innenring und dem zweiten Innenring ausgebildet ist.

Der Außenring und/oder der erste Innenring und/oder der zweite Innenring sind vorzugsweise als in Umfangsrichtung geschlossene Ringe ausgebildet. Dadurch lassen sich eine hohe mechanische Stabilität und ein gutes Abrollverhalten der Wälzkörper auf den Laufbahnen erzielen.

Die ersten Wälzkörper können in einem ersten Käfig und die zweiten Wälzkörper in einem zweiten Käfig angeordnet sein. Der erste Käfig und der zweite Käfig können segmentiert ausgebildet sein. Dies reduziert die Gefahr einer mechanischen Überbeanspruchung der Käfige und ermöglicht die Einplanung einer thermischen Ausdehnung.

Das erfindungsgemäße Wälzlager ist vorzugsweise als ein Kegelrollenlager ausgebildet. Weiterhin ist das erfindungsgemäße Wälzlager insbesondere als ein Rotorlager einer Windenergieanlage ausgebildet. Da bei einer Windenergieanlage eine Reparatur oder ein Austausch eines Wälzlagers sehr aufwendig ist, ist bei einer derartigen Anwendung eine zuverlässige Schmierung des Wälzlagers, welche Voraussetzung für einen langen störungsfreien Betrieb ist, besonders wichtig.

Die Erfindung bezieht sich weiterhin auf ein Lagersystem mit einem erfindungsgemäß ausgebildeten Wälzlager und einer Schmiereinrichtung, die mit der ersten Schmierfettzuführung und der zweiten Schmierfettzuführung des Wälzlagers fluidisch gekoppelt ist.

An die erste Schmierfettzuführung und an die zweite Schmierfettzuführung kann jeweils eine Zufuhrleitung angeschlossen sein. Die Schmiereinrichtung kann wenigstens eine Fördereinrichtung zur Förderung des Schmierfetts zur ersten Schmierfettzuführung und/oder zur zweiten Schmierfettzuführung aufweisen. Weiterhin kann die Schmiereinrichtung wenigstens einen Schmierfettverteiler aufweisen, an den wenigstens eine der Zufuhrleitungen angeschlossen ist. Auf diese Weise kann eine kontinuierliche, eine intermetierende oder eine bedarfsgesteuerte Schmierfettzufuhr zum Wälzlager realisiert werden.

Außerdem kann die Schmiereinrichtung wenigstens einen Sammelbehälter für das aus dem Schmierfettauslass austretende Schmierfett aufweisen, der sich mit dem ersten Innenring und dem zweiten Innenring mitdreht. Der Sammelbehälter kann über einen Abfuhrkanal, der wenigstens bereichsweise innerhalb des gelagerten Maschinenteils verläuft, mit dem Schmierfettauslass verbunden sein. Zudem kann der Sammelbehälter am gelagerten Maschinenteil befestigt sein. Besonders vorteilhaft ist es, wenn der Sammelbehälter wenigstens bereichsweise in einer größeren radialen Entfernung von der Rotationsachse angeordnet ist als der Schmierfettauslass. Eine derartige Anordnung des Sammelbehälters und eine derartige Anbindung des Sammelbehälters an den Schmierfettauslass begünstigen den Schmierfetttransport zum Sammelbehälter und den Verbleib des aufgefangenen Schmierfetts im Sammelbehälter. Ein weiterer Vorteil besteht darin, dass sich ein rotierender Sammelbehälter leichter realisieren lässt als eine rotierende Fördereinrichtung.

Die Erfindung betrifft weiterhin eine Windenergieanlage mit dem erfindungsgemäßen Lagersystem.

Die Erfindung wird nachstehend anhand des in der Zeichnung dargestellten Ausführungsbeispiels erläutert.

Es zeigen
- Figur 1: ein Ausführungsbeispiel eines erfindungsgemäß ausgebildeten Lagersys- tems in Schnittdarstellung,
- Figur 2: einen vergrößerten Ausschnitt aus Figur 1 in der Umgebung des ersten Dichtrings und
- Figur 3: einen vergrößerten Ausschnitt aus Figur 1 in der Umgebung des zweiten Dichtrings.

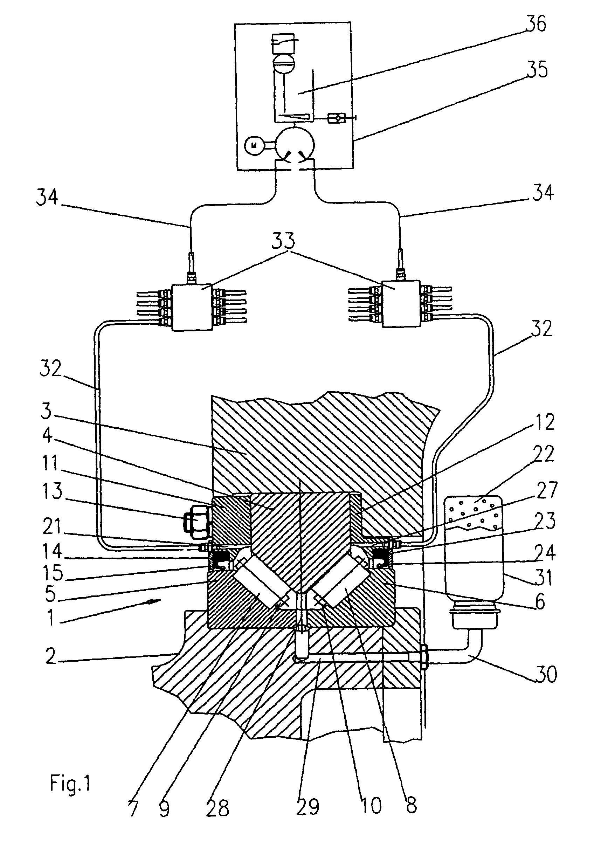

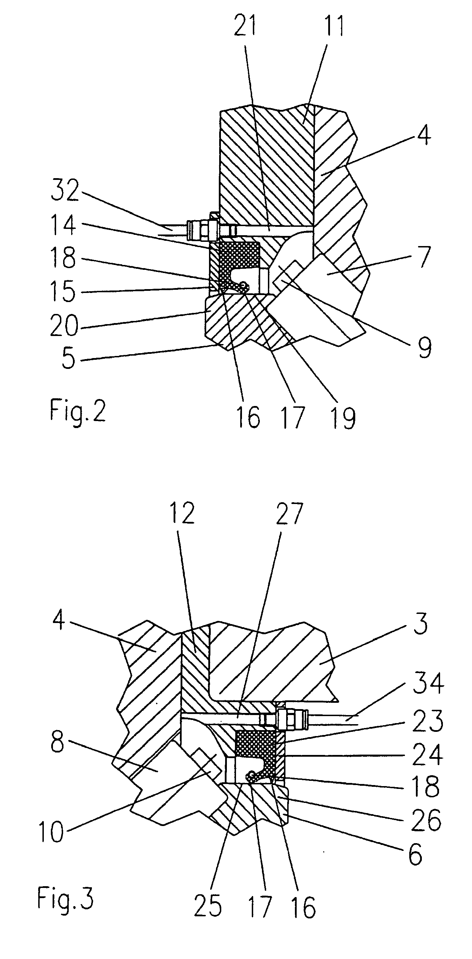

Figur 1 zeigt ein Ausführungsbeispiel eines erfindungsgemäß ausgebildeten Lagersystems in Schnittdarstellung. In den Figuren 2 und 3 sind vergrößerte Ausschnitte aus Figur 1 dargestellt. Das dargestellte Ausführungsbeispiel des Lagersystems weist ein zweireihig ausgebildetes Kegelrollenlager 1 in X-Anordnung auf. Das Kegelrollenlager 1 dient beispielsweise der drehbaren Lagerung einer Rotorwelle 2 einer Windenergieanlage relativ zu einem Lagergehäuse 3 um eine strichpunktiert dargestellte Rotationsachse.

Das Kegelrollenlager 1 verfügt über einen feststehenden Außenring 4, der in einer Bohrung des Lagergehäuses 3 angeordnet ist und zwei konische Laufbahnen aufweist. Der Außenring weist einen Außendurchmesser von wenigstens einem Meter auf. Weiterhin verfügt das Kegelrollenlager 1 über zwei drehende Innenringe 5 und 6, die axial nebeneinander auf der Rotorwelle 2 angeordnet sind und je eine konische Laufbahn aufweisen. Der Außenring 4 und die beiden Innenringe 5, 6 sind beim dargestellten Ausführungsbeispiel als in Umfangsrichtung geschlossene Ringe ausgebildet. Prinzipiell ist es auch möglich, segmentierte Ringe einzusetzen.

Auf der Laufbahn des Innenrings 5 und der benachbarten Laufbahn des Außenrings 4 rollen kegelig ausgebildete Wälzkörper 7 ab. Auf der Laufbahn des Innenrings 6 und der benachbarten Laufbahn des Außenrings 4 rollen kegelig ausgebildete Wälzkörper 8 ab. Die Wälzkörper 7 sind in einem Käfig 9, die Wälzkörper 8 in einem Käfig 10 angeordnet. Die Käfige 9 und 10 sind beim dargestellten Ausführungsbeispiel segmentiert ausgebildet. Beispielsweise können die einzelnen Käfigsegmente in Umfangsrichtung aneinandergereiht sein, wie in der DE 102 46 825 A1 offenbart und aus Kunststoff hergestellt sein.

Am Außenring 4 ist an einer Axialseite eine ringförmig ausgebildete Halterung 11 und an der anderen Axialseite eine ringförmig ausgebildete Halterung 12 mittels Schrauben 13 befestigt. Die Schrauben 13 dienen gleichzeitig der Befestigung des Außenrings 4 am Lagergehäuse 3. Die Halterungen 11, 12 können aus Metall oder aus Kunststoff gefertigt sein.

Wie aus Figur 2 im Einzelnen hervorgeht ist an der Halterung 11 ein Dichtring 14 mittels eines Klemmrings 15 befestigt. Der Dichtring 14 kann als eine Radialwellendichtung ausgebildet sein und weist beim dargestellten Ausführungsbeispiel eine Staublippe 16 und eine Dichtlippe 17 auf. Die Dichtlippe 17 ist mittels einer Feder 18 radial einwärts vorgespannt und liegt berührend an einer Anlauffläche 19 an, die auf einer Schulter 20 des Innenrings 5 ausgebildet ist. Durch den gesamten Querschnitt der Halterung 11 erstreckt sich in Axialrichtung ein Einlasskanal 21 für ein Schmierfett 22, der nahe den Stirnflächen der Wälzkörper 7 in den Innenraum des Kegelrollenlagers 1 mündet.

Wie aus Figur 3 im Einzelnen hervorgeht ist an der Halterung 12 ein Dichtring 23 mittels eines Klemmrings 24 befestigt. Der Dichtring 23 ist in analoger Weise wie der Dichtring 14 ausgebildet und liegt berührend an einer Anlauffläche 25 an, die auf einer Schulter 26 des Innenrings 6 ausgebildet ist. Durch den gesamten Querschnitt der Halterung 12 erstreckt sich in Axialrichtung ein Einlasskanal 27 für das Schmierfett 22, der nahe den Stirnflächen der Wälzkörper 8 in den Innenraum des Kegelrollenlagers 1 mündet.

Die Innenringe 5, 6 bestehen entweder aus einem durchgehend gehärteten Stahl oder sind zumindest im Bereich der Laufbahnen und der Anlaufflächen 19, 25 gehärtet. Die Anlaufflächen 19, 25 sind mit hoher Präzision gefertigt und beispielsweise drallfrei geschliffen. Auf diese Weise kann bei geringer Reibung eine zuverlässige Abdichtung erreicht werden und der Verschleiß der Dichtlippen 17 der Dichtringe 14, 23 niedrig gehalten werden.

Beim dargestellten Ausführungsbeispiel stoßen die Innenringe 5, 6 axial aneinander. Es ist aber auch möglich, dass axial zwischen den Innenringen 5, 6 ein kleiner Spalt verbleibt. Im Bereich der Stoßflächen sind über den Umfang der Innenringe 5, 6 verteilt mehrere, insbesondere acht, Auslasskanäle 28 für das Schmierfett 22 ausgebildet, die sich jeweils vom Innenraum des Kegelrollenlagers 1 radial einwärts durch den gesamten Querschnitt der Innenringe 5, 6 hindurch erstrecken und in Abfuhrkanäle 29 münden, welche in der Rotorwelle 2 ausgebildet sind. Die Auslasskanäle 28 sind durch eine nicht figürlich dargestellte Nut verbunden, die im Bereich der Stoßfläche der Innenringe 5, 6 umläuft. Die Abfuhrkanäle 29 verlaufen zunächst radial einwärts, dann axial durch die Rotorwelle 2 bis zu deren Außenseite. Dort münden die Abfuhrkanäle 29 jeweils in eine Abfuhrleitung 30, die sich zunächst axial, dann radial auswärts erstreckt. An jede Abfuhrleitung 30 ist ein Sammelbehälter 31 für das Schmierfett 22 angeschlossen, so dass insbesondere acht Sammelbehälter 31 vorhanden sind. Ebenso ist es auch möglich, dass ein Sammelbehälter 31 jeweils an mehrere Abfuhrleitungen 30 angeschlossen ist, so dass insgesamt eine geringere Zahl von Sammelbehältern 31, beispielsweise vier, ausreicht. Die Sammelbehälter 31 sind mit ihrer Längserstreckung radial auswärts orientiert, ganz oder teilweise radial außerhalb der Auslasskanäle 28 angeordnet und drehen sich, ebenso wie die Abfuhrleitungen 30, mit den Innenringen 5, 6 mit.

Die Einlasskanäle 21, 27 sind über Zufuhrleitungen 32 jeweils mit einem Verteiler 33 verbunden, wobei beim dargestellten Ausführungsbeispiel zwei Verteiler 33 vorgesehen sind. Die Verteiler 33 sind über weitere Zufuhrleitungen 34 mit einer Fördereinrichtung 35 verbunden. Die Fördereinrichtung 35 enthält ein Schmierfettreservoir 36 oder ist mit einem Schmierfettreservoir 36 verbunden.

Im Betriebszustand des Lagersystems dreht sich die Rotorwelle 2 relativ zum Lagergehäuse 3. Um eine ausreichende Schmierung des Kegelrollenlagers 1 sicherzustellen, wird mittels der Fördereinrichtung 35 Schmierfett 22 vom Schmierfettreservoir 36 über die Zufuhrleitungen 34 zu den Verteilern 33 gefördert und von dort über die Zufuhrleitungen 32 an die Einlasskanäle 21, 27 verteilt.

Die Inbetriebnahme der Fördereinrichtung 35 kann gemäß unterschiedlichen Funktionsschemata erfolgen. Bei einer Variante läuft die Fördereinrichtung 35 während des Betriebs des Lagersystems mit einer geringen Förderleistung im Dauerbetrieb. Bei einer weiteren Variante ist ein Intervallbetrieb der Fördereinrichtung 35 vorgesehen, d. h. die Fördereinrichtung 35 wird jeweils für ein Zeitintervall in Betrieb genommen und dann wieder ausgeschaltet. Die Zeitintervalle können fest vorgegeben oder bedarfsgerecht variiert werden. Beispielsweise kann bei hohen Drehzahlen häufiger und/oder länger geschmiert werden. Alternativ oder zusätzlich kann auch die Förderleistung der Fördereinrichtung variiert werden.

Das in die Einlasskanäle 21, 27 gepresste Schmierfett 22 tritt von beiden Axialseiten des Kegelrollenlagers 1 im Bereich der Stirnflächen der Wälzkörper 7 und der Wälzkörper 8 in den Innenraum des Kegelrollenlagers 1 ein. Von dort gelangt das Schmierfett 22 entlang der Wälzkörper 7, 8 schräg einwärts zu der Nut, die im Bereich der Stoßfläche der Innenringe 5, 6 verläuft und dann zu den Auslasskanälen 28. Durch die beidseitige Zufuhr und die mittige Abfuhr des Schmierfetts 22 ist eine gleichbleibend gute Schmierung beider Wälzkörperreihen des Kegelrollenlagers 1 gewährleistet. Im weiteren Verlauf gelangt das Schmierfett 22 durch die Auslasskanäle 28, die Abfuhrkanäle 29 und die Abfuhrleitungen 30 zu den Sammelbehältern 31 und wird dort aufgefangen. Die Rotation der Sammelbehälter 31 hat zur Folge, dass das in den Sammelbehältern 31 aufgefangene Schmierfett 22 jeweils durch die Einwirkung der Zentrifugalkraft gegen den Boden der Sammelbehälter 31 gedrückt wird.

Die Sammelbehälter 31 werden von Zeit zu Zeit entleert, wobei eine Rückführung des Schmierfetts 22 zum Schmierfettreservoir 36 möglich ist, falls das Schmierfett 22 noch über ausreichende Schmiereigenschaften verfügt. Andernfalls wird das Schmierfett 22 der Entsorgung zugeführt. Unabhängig davon ob ein geschlossener Schmierfett-Kreislauf realisiert ist oder das Schmierfett 22 nach dem Durchlauf durch das Kegelrollenlager 1 entsorgt wird, ist das Schmiersystem so ausgebildet, dass ein unkontrolliertes Austreten des Schmierfetts 22 in die Umgebung verhindert wird.

Das in den Figuren 1 bis 3 dargestellte Ausführungsbeispiel des erfindungsgemäßen Lagersystems kann auf vielfältige Weise abgewandelt werden.

So können die Halterungen 11, 12 beispielsweise auch unabhängig von der Verschraubung zwischen dem Außenring 4 und dem Lagergehäuse 3 am Außenring 4 befestigt sein und somit montiert und demontiert werden, ohne den Außenring 4 zu lösen. Dies kann beispielsweise dadurch erreicht werden, dass sich die Schrauben 13 nicht durch die Halterungen 11, 12 hindurch erstrecken, sondern neben den Halterungen 11, 12 angeordnet sind und dass die Halterungen 11, 12 mittels separater Schrauben am Außenring 4 befestigt sind. Allerdings können insbesondere durch die Rotorwelle 2 zusätzliche Einschränkungen hinsichtlich den Möglichkeiten der Montage und Demontage der Halterungen 11, 12 bestehen.

Weiterhin ist es möglich, die Einlasskanäle 21, 27 nicht durch die Halterungen 11, 12, sondern durch die Dichtringe 14, 23 selbst zu führen.

Bei einer weiteren Abwandlung sind die Dichtringe 14, 23 jeweils einteilig mit den Halterungen 11, 12 ausgebildet und insbesondere durchgehend aus dem gleichen Material hergestellt. Als Material eignen sich insbesondere Polyurethan (PUR) und Polytetrafluorethylen (PTFE). Die Herstellung kann beispielsweise durch Drehen oder ein sonstiges spanabhebendes Verfahren erfolgen. Ebenso ist es jedoch auch möglich die Dichtringe 14, 23, insbesondere die Staublippen 16 und die Dichtlippen 17 spritztechnisch oder durch Vulkanisieren herzustellen.

Diese und weitere Abwandlungen können jeweils sowohl einzeln als auch in Kombination realisiert werden.

### Bezugszeichenliste

- 1: Kegelrollenlager
- 2: Rotorwelle
- 3: Lagergehäuse
- 4: Außenring
- 5: Innenring
- 6: Innenring
- 7: Wälzkörper
- 8: Wälzkörper
- 9: Käfig
- 10: Käfig
- 11: Halterung
- 12: Halterung
- 13: Schraube
- 14: Dichtring
- 15: Klemmring
- 16: Staublippe
- 17: Dichtlippe
- 18: Feder
- 19: Anlauffläche
- 20: Schulter
- 21: Einlasskanal
- 22: Schmierfett
- 23: Dichtring
- 24: Klemmring
- 25: Anlauffläche
- 26: Schulter
- 27: Einlasskanal
- 28: Auslasskanal
- 29: Abfuhrkanal
- 30: Abfuhrleitung
- 31: Sammelbehälter
- 32: Zufuhrleitung
- 33: Verteiler
- 34: Zufuhrleitung
- 35: Fördereinrichtung
- 36: Schmierfettreservoir

## Patentansprüche

1. Zweireihiges Wälzlager zur drehbaren Lagerung eines Maschinenteils (2) relativ zu einer Rotationsachse, mit
- einem Außenring (4), dessen Außendurchmesser wenigstens 1 Meter beträgt,
- einem ersten Innenring (5),
- einem zweiten Innenring (6), der bezogen auf die Rotationsachse axial neben dem ersten Innenring (5) angeordnet ist,
- einem Satz von ersten Wälzkörpern (7), die zwischen dem Außenring (4) und dem ersten Innenring (5) abrollen,
- einem Satz von zweiten Wälzkörpern (8), die bezogen auf die Rotationsachse axial neben den ersten Wälzkörpern (7) angeordnet sind und zwischen dem Außenring (4) und dem zweiten Innenring (6) abrollen,
**dadurch gekennzeichnet, dass** bezogen auf die Rotationsachse an einer ersten Axialseite des Außenrings (4) eine erste Schmierfettzuführung (21) zur Versorgung der ersten Wälzkörper (7) mit Schmierfett (22) angeordnet ist und an einer zweiten Axialseite des Außenrings (4) eine zweite Schmierfettzuführung (27) zur Versorgung der zweiten Wälzkörper (8) mit Schmierfett (22) angeordnet ist und wenigstens ein Schmierfettauslass (28) vorgesehen ist, der sich mit dem ersten Innenring (5) und dem zweiten Innenring (6) mitdreht.

2. Wälzlager nach Anspruch 1, **dadurch gekennzeichnet, dass** der Außenring (4) und die zum Außenring (4) drehfest ausgebildeten Komponenten als im Betriebszustand feststehend ausgebildet sind.

3. Wälzlager nach einem der vorhergehenden Ansprüche, **dadurch gekennzeichnet, dass** die erste Schmierfettzuführung (21) und die zweite Schmierfettzuführung (27) zum Außenring (4) drehfest ausgebildet sind.

4. Wälzlager nach einem der vorhergehenden Ansprüche, **dadurch gekennzeichnet, dass** die erste Schmierfettzuführung (21) und die zweite Schmierfettzuführung (27) in einer radialen Entfernung von der Rotationsachse angeordnet sind, die größer ist als der maximale Radius des ersten Innenrings (5) und des zweiten Innenrings (6).

5. Wälzlager nach einem der vorhergehenden Ansprüche, **dadurch gekennzeichnet, dass** die erste Schmierfettzuführung (21) an einer ersten Halterung (11) angeordnet ist und die zweite Schmierfettzuführung (27) an einer zweiten Halterung (12) angeordnet ist.

6. Wälzlager nach Anspruch 5, **dadurch gekennzeichnet, dass** die erste Halterung (11) und die zweite Halterung (12) am Außenring (4) befestigt sind.

7. Wälzlager nach einem der vorhergehenden Ansprüche, **dadurch gekennzeichnet, dass** der Schmierfettauslass (28) in einer kleineren radialen Entfernung von der Rotationsachse angeordnet ist als die erste Schmierfettzuführung (21) und die zweite Schmierfettzuführung (27).

8. Wälzlager nach einem der vorhergehenden Ansprüche, **dadurch gekennzeichnet, dass** der Schmierfettauslass (28) in die Bohrung des ersten Innenrings (5) und/oder des zweiten Innenrings (6) mündet.

9. Wälzlager nach einem der vorhergehenden Ansprüche, **dadurch gekennzeichnet, dass** der Schmierfettauslass (28) bezogen auf die Rotationsachse axial zwischen den ersten Wälzkörpern (7) und den zweiten Wälzkörpern (8) angeordnet ist.

10. Lagersystem mit einem Wälzlager (1) nach einem der vorhergehenden Ansprüche und einer Schmiereinrichtung, die mit der ersten Schmierfettzuführung (21) und der zweiten Schmierfettzuführung (27) des Wälzlagers (1) fluidisch gekoppelt ist.

11. Lagersystem nach Anspruch 10, **dadurch gekennzeichnet, dass** die Schmiereinrichtung wenigstens einen Sammelbehälter (31) für das aus dem Schmierfettauslass (28) austretende Schmierfett (22) aufweist, der sich mit dem ersten Innenring (5) und dem zweiten Innenring (6) mitdreht.

12. Lagersystem nach Anspruch 11, **dadurch gekennzeichnet, dass** der Sammelbehälter (31) über einen Abfuhrkanal (29), der wenigstens bereichsweise innerhalb des gelagerten Maschinenteils (2) verläuft, mit dem Schmierfettauslass (28) verbunden ist.

13. Lagersystem nach einem der Ansprüche 11 oder 12, **dadurch gekennzeichnet, dass** der Sammelbehälter (31) am gelagerten Maschinenteil (2) befestigt ist.

14. Lagersystem nach einem der Ansprüche 11 bis 13, **dadurch gekennzeichnet, dass** der Sammelbehälter (31) wenigstens bereichsweise in einer größeren radialen Entfernung von der Rotationsachse angeordnet ist als der Schmierfettauslass (28).

## Claims

1. Two-row roller bearing for rotatable bearing of a machine part (2) relative to a rotation axis, having
- an outer ring (4) whose external diameter is at least 1 metre,
- a first inner ring (5),
- a second inner ring (6), which is arranged axially alongside the first inner ring (5) with respect to the rotation axis,
- a set of first roller bodies (7), which roll between the outer ring (4) and the first inner ring (5),
- a set of second roller bodies (8), which are arranged axially alongside the first roller bodies (7) with respect to the rotation axis and roll between the outer ring (4) and the second inner ring (6), **characterized in that** a first lubrication grease supply (21) for supplying the first roller bodies (7) with lubrication grease (22) is arranged on a first axial side of the outer ring (4) with respect to the rotation axis, and a second lubrication grease supply (27) for supplying the second roller bodies (8) with lubrication grease (22) is arranged on a second axial side of the outer ring (4) with respect to the rotation axis, and at least one lubrication grease outlet (28) is provided, and rotates with the first inner ring (5) and the second inner ring (6).

2. Roller bearing according to Claim 1, **characterized in that** the outer ring (4) and the components which are rotationally fixed to the outer ring (4) are stationary in the operating state.

3. Roller bearing according to one of the preceding claims, **characterized in that** the first lubrication grease supply (21) and the second lubrication grease supply (27) are rotationally fixed to the outer ring (4).

4. Roller bearing according to one of the preceding claims, **characterized in that** the first lubrication grease supply (21) and the second lubrication grease supply (27) are arranged at a radial distance from the rotation axis which is greater than the maximum radius of the first inner ring (5) and of the second inner ring (6).

5. Roller bearing according to one of the preceding claims, **characterized in that** the first lubrication grease supply (21) is arranged on a first holder (11), and the second lubrication grease supply (27) is arranged on a second holder (12).

6. Roller bearing according to Claim 5, **characterized in that** the first holder (11) and the second holder (12) are attached to the outer ring (4).

7. Roller bearing according to one of the preceding claims, **characterized in that** the lubrication grease outlet (28) is arranged at a shorter radial distance from the rotation axis than the first lubrication grease supply (21) and the second lubrication grease supply (27).

8. Roller bearing according to one of the preceding claims, **characterized in that** the lubrication grease outlet (28) opens into the hole in the first inner ring (5) and/or the second inner ring (6).

9. Roller bearing according to one of the preceding claims, **characterized in that** the lubrication grease outlet (28) is arranged axially between the first roller bodies (7) and the second roller bodies (8) with respect to the rotation axis.

10. Bearing system having a roller bearing (1) according to one of the preceding claims and having a lubrication device which is fluidically coupled to the first lubrication grease supply (21) and to the second lubrication grease supply (27) of the roller bearing (1).

11. Bearing system according to Claims 10, **characterized in that** the lubrication device has at least one reservoir (31) for the lubrication grease (22) emerging from the lubrication grease outlet (28), which reservoir (31) rotates with the first inner ring (5) and the second inner ring (6).

12. Bearing system according to Claim 11, **characterized in that** the reservoir (31) is connected to the lubrication grease outlet (28) via a discharge channel (29) which runs at least in places within the borne machine part (2).

13. Bearing system according to one of Claims 11 or 12, **characterized in that** the reservoir (31) is attached to the borne machine part (2).

14. Bearing system according to one of Claims 11 to 13, **characterized in that** the reservoir (31) is arranged at least in places at a greater radial distance from the rotation axis than the lubrication grease outlet (28).

## Revendications

1. Palier à roulement à deux rangées destiné à l'appui rotatif d'une partie de machine (2) par rapport à un axe de rotation, avec
- une bague extérieure (4), dont le diamètre extérieur vaut au moins 1 mètre,
- une première bague intérieure (5),
- une deuxième bague intérieure (6), qui est disposée axialement à côté de la première bague intérieure (5) par rapport à l'axe de rotation,
- un jeu de premiers corps de roulement (7), qui roulent entre la bague extérieure (4) et la première bague intérieure (5),
- un jeu de deuxièmes corps de roulement (8), qui sont disposés axialement à côté des premiers corps de roulement (7) par rapport à l'axe de rotation et qui roulent entre la bague extérieure (4) et la deuxième bague intérieure (6),
**caractérisé en ce que**, par rapport à l'axe de rotation, une première arrivée de graisse de lubrification (21) est disposée sur un premier côté axial de la bague extérieure (4) pour l'alimentation des premiers corps de roulement (7) en graisse de lubrification (22) et une deuxième arrivée de graisse de lubrification (27) est disposée sur un deuxième côté axial de la bague extérieure (4) pour l'alimentation des deuxièmes corps de roulement (8) en graisse de lubrification (22) et il est prévu au moins une sortie de graisse de lubrification (28), qui tourne avec la première bague intérieure (5) et avec la deuxième bague intérieure (6).

2. Palier à roulement selon la revendication 1, **caractérisé en ce que** la bague extérieure (4) et les composants solidaires en rotation de la bague extérieure (4) se présentent comme stationnaires en situation de fonctionnement.

3. Palier à roulement selon l'une quelconque des revendications précédentes, **caractérisé en ce que** la première arrivée de graisse de lubrification (21) et la deuxième arrivée de graisse de lubrification (27) sont solidaires en rotation de la bague extérieure (4).

4. Palier à roulement selon l'une quelconque des revendications précédentes, **caractérisé en ce que** la première arrivée de graisse de lubrification (21) et la deuxième arrivée de graisse de lubrification (27) sont disposées à une distance radiale de l'axe de rotation, qui est plus grande que le rayon maximal de la première bague intérieure (5) et de la deuxième bague intérieure (6).

5. Palier à roulement selon l'une quelconque des revendications précédentes, **caractérisé en ce que** la première arrivée de graisse de lubrification (21) est disposée sur un premier support (11) et la deuxième arrivée de graisse de lubrification (27) est disposée sur un deuxième support (12).

6. Palier à roulement selon la revendication 5, **caractérisé en ce que** le premier support (11) et le deuxième support (12) sont fixés sur la bague extérieure (4).

7. Palier à roulement selon l'une quelconque des revendications précédentes, **caractérisé en ce que** la sortie de graisse de lubrification (28) est disposée à une plus petite distance radiale de l'axe de rotation que la première arrivée de graisse de lubrification (21) et que la deuxième arrivée de graisse de lubrification (27).

8. Palier à roulement selon l'une quelconque des revendications précédentes, **caractérisé en ce que** la sortie de graisse de lubrification (28) débouche dans l'alésage de la première bague intérieure (5) et/ou de la deuxième bague intérieure (6).

9. Palier à roulement selon l'une quelconque des revendications précédentes, **caractérisé en ce que** la sortie de graisse de lubrification (28) est disposée, par rapport à l'axe de rotation, axialement entre les premiers corps de roulement (7) et les deuxièmes corps de roulement (8).

10. Système de palier comportant un palier à roulement (1) selon l'une quelconque des revendications précédentes et un dispositif de lubrification, qui est couplé de façon fluidique à la première arrivée de graisse de lubrification (21) et à la deuxième arrivée de graisse de lubrification (27) du palier à roulement (1).

11. Système de palier selon la revendication 10, **caractérisé en ce que** le dispositif de lubrification présente au moins un récipient collecteur (31) pour la graisse de lubrification (22) sortant de la sortie de graisse de lubrification (28), qui tourne avec la première bague intérieure (5) et avec la deuxième bague intérieure (6).

12. Système de palier selon la revendication 11, **caractérisé en ce que** le récipient collecteur (31) est relié à la sortie de graisse de lubrification (28) par un canal d'évacuation (29), qui s'étend en moins localement à l'intérieur de la partie de machine supportée (2).

13. Système de palier selon l'une quelconque des revendications 11 ou 12, **caractérisé en ce que** le récipient collecteur (31) est fixé à la partie de machine supportée (2).

14. Système de palier selon l'une quelconque des revendications 11 à 13, **caractérisé en ce que** le récipient collecteur (31) est disposé au moins localement à une plus grande distance radiale de l'axe de rotation que la sortie de graisse de lubrification (28).
